(19) **Europäisches Patentamt / European Patent Office / Office européen des brevets**

(11) **EP 2 158 468 B1**

(12) **FASCICULE DE BREVET EUROPEEN**

(45) Date de publication et mention
de la délivrance du brevet:
**13.04.2016 Bulletin 2016/15**

(21) Numéro de dépôt: **08805633.8**

(22) Date de dépôt: **02.06.2008**

(51) Int Cl.:
**G01M 17/02** *(2006.01)*

(86) Numéro de dépôt international:
**PCT/FR2008/000745**

(87) Numéro de publication internationale:
**WO 2009/004173 (08.01.2009 Gazette 2009/02)**

(54) **PROCÈDE D'ESTIMATION DE LA PERFORMANCE D'UN PNEU DANS UNE SITUATION DE FREINAGE**

VERFAHREN ZUR SCHÄTZUNG DER LEISTUNG EINES REIFENS IM BREMSZUSTAND

METHOD FOR ESTIMATING THE PERFORMANCE OF A TYRE IN BRAKING CONDITIONS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **11.06.2007 FR 0704152**

(43) Date de publication de la demande:
**03.03.2010 Bulletin 2010/09**

(73) Titulaires:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventeurs:
• **MALLET, Eric**
**F-63200 Pessat-Villeneuve (FR)**
• **BUISSON, Jérémy**
**F-63450 Saint-Saturnin (FR)**

(74) Mandataire: **Dequire, Philippe Jean-Marie Denis**
**M.F.P. Michelin**
**SGD/LG/PI-F35-Ladoux**
**23, place des Carmes Déchaux**
**63040 Clermont-Ferrand Cedex 09 (FR)**

(56) Documents cités:
**EP-A- 0 775 903        EP-A- 1 637 863**
**US-A1- 2004 007 046**

• **HEDRICK K ET AL: "Real-Time Slip-Based Estimation of Maximum Tire-Road Friction Coefficient" IEEE / ASME TRANSACTIONS ON MECHATRONICS, IEEE SERVICE CENTER, PISCATAWAY, NJ, US, vol. 9, no. 2, juin 2004 (2004-06), pages 454-458, XP011113983 ISSN: 1083-4435 cité dans la demande**
• **C. Canudas-De-Wit ET AL: "Dynamic Friction Models for Longitudinal Road/Tire Interaction: Theoretical Advances", 21st IASTED Conference on Modelling, Identification and Control, 28 February 2002 (2002-02-28), pages 48-53, XP055219516, Retrieved from the Internet: URL:http://soliton.ae.gatech.edu/labs/dcsl /papers/iasted02a.pdf [retrieved on 2015-10-08]**

**Description**

La présente invention concerne, de façon générale, les techniques d'équipement des véhicules terrestres en pneumatiques.

Plus précisément l'invention concerne un procédé d'estimation de la performance, dans une situation de freinage, d'un pneu susceptible d'équiper un véhicule, ce procédé comprenant une phase expérimentale incluant au moins une étape d'évaluation du coefficient d'adhérence du pneu sur le sol.

Des procédés de ce type sont décrits dans les articles HEDRICK K ET AL : « Real-Time Slip-Based Estimation of Maximum Tire-Road Friction Coefficient » IEEE/ASME TRANSACTIONS ON MECHATRONICS, IEEE SERVICE CENTER, PISCATAWAY, NJ, US, vol. 9, no. 2, juin 2004 (2004-06), pages 454-458 et C. CANUDAS-DE-WIT ET AL: <<Dynamic Friction Models for Longitudinal Road/Tire Interaction: Theoretical Advances>>, 21st IASTED CONFERENCE ON MODELLING, IDENTFICATION AND CONTROL, 28 février 2002, pages 48-53.

Des procédés voisins sont décrits dans les documents de brevet EP 1 637 863, EP 0 775 903 et US 2004/0007046.

Bien que les performances des pneumatiques en matière de freinage aient, par le passé, souvent été évaluées par des tests de distance de freinage d'un véhicule équipé de ces pneumatiques, ces performances sont aujourd'hui plus communément évaluées sur la base de mesures du coefficient d'adhérence d'un pneu unique équipant une remorque, ces mesures étant corrélées à des mesures du taux de glissement de ce pneu et à des indicateurs dérivés de ces mesures.

Bien que cette technique présente l'intérêt de ne requérir l'utilisation que d'un seul pneu, elle conduit souvent à des évaluations de fiabilité insuffisante, et ne permet notamment pas d'assurer que plusieurs pneus différents, classés dans un ordre croissant de performances sur la base de ces tests, développent, une fois montés sur un même type de véhicule, des performances qui les classent dans le même ordre.

Dans ce contexte, l'invention a pour but de proposer un procédé d'estimation de la performance d'un pneu en situation de freinage qui, en dépit de sa simplicité, présente une fiabilité accrue par rapport aux techniques connues.

A cette fin, le procédé de l'invention est spécifié en ce que l'étape d'évaluation du coefficient d'adhérence du pneu sur le sol est effectuée pour différentes valeurs de la vitesse de déplacement relatif de l'axe du pneu par rapport au sol et pour différentes valeurs du taux de glissement du pneu sur le sol, en ce que ladite phase expérimentale comprend en outre une étape de modélisation consistant à représenter le coefficient d'adhérence de ce pneu, tel qu'il résulte de l'étape d'évaluation, par une fonction de la vitesse de déplacement relatif de l'axe du pneu par rapport au sol et du taux de glissement de ce pneu sur le sol, et est caractérisé en ce que ce procédé comprend en outre une phase prédicitive de la performance du pneu en situation de freinage incluant une opération de détermination d'un indicateur global de performance du pneu, consistant à intégrer, par rapport à la vitesse instantanée de déplacement relatif de l'axe du pneu et du sol, et par rapport au taux de glissement de ce pneu sur le sol, la fonction représentative du coefficient d'adhérence du pneu, sur un domaine de vitesses instantanées et de taux de glissement correspondant à une séquence de freinage réelle ou simulée.

De préférence, l'étape d'évaluation du coefficient d'adhérence du pneu comprend les opérations simultanées consistant à faire rouler le pneu sur une surface de référence assimilée au sol, à appliquer le pneu sur la surface de référence avec une force d'appui d'intensité connue par réglage et / ou par mesure, à faire défiler, par rapport à l'axe du pneu, la surface de référence à une vitesse instantanée de déplacement relatif, connue par réglage et / ou par mesure, et décroissant depuis une valeur maximale jusqu'à une valeur minimale, à mesurer la vitesse angulaire instantanée de rotation du pneu, et à appliquer périodiquement au pneu un couple de freinage de valeur instantanée connue par réglage et / ou par mesure et propre à provoquer un glissement du pneu sur la surface de référence.

Le coefficient d'adhérence peut typiquement être évalué par le rapport, à la force d'appui, de la force longitudinale correspondant au couple de freinage.

L'opération d'application périodique du couple de freinage est avantageusement régulée pour faire varier le taux de glissement du pneu par rapport à la surface de référence entre une valeur minimale de préférence nulle et une valeur maximale au moins égale à 20 %.

Il est également possible de prévoir que l'opération d'application périodique du couple de freinage soit régulée pour atteindre périodiquement, voire dépasser, la valeur du taux de glissement pour laquelle la valeur d'adhérence est maximale.

Dans tous les cas, l'étape d'évaluation du coefficient d'adhérence du pneu peut avantageusement être mise en oeuvre dans un local à température sensiblement constante. L'étape de modélisation comprend par exemple une opération d'optimisation consistant à rechercher les valeurs à affecter à des paramètres prédéterminés pour qu'une expression paramétrique de ladite fonction de la vitesse de déplacement relatif de l'axe du pneu par rapport au sol et du taux de glissement de ce pneu sur le sol corresponde au mieux au coefficient d'adhérence tel qu'évalué, lors de l'étape d'évaluation, pour les différentes valeurs de la vitesse de déplacement relatif de l'axe du pneu par rapport au sol et pour les différentes valeurs du taux de glissement du pneu sur le sol.

Dans ce cas, l'opération d'optimisation peut utiliser l'expression paramétrique suivante :

$$Mu3D = (D*sin(C*atan(B*X1-E*(B*X1-atan(B*X1)))))+Sv,$$

où D, B et X1 correspondent eux-mêmes aux expressions paramétriques suivantes :

$$D = D0 + D1*V + D2*V^2,$$

$$B = B0 + B1*V + B2*V^2,$$

$$X1 = (g\% / 100) + Sh,$$

et où V est la vitesse instantanée de déplacement relatif de l'axe du pneu par rapport à la surface de référence, et où g% est le taux de glissement de ce pneu par rapport à cette surface, défini par :

$$g\% = 100*(V - Vp)/ V,$$

Vp étant la vitesse périphérique du pneu.

Par ailleurs, la séquence de freinage choisie pour définir le domaine d'intégration de la vitesse instantanée et du taux de glissement inclut de préférence une modulation du couple de freinage du type de celle rencontrée sur un véhicule équipé d'un système antiblocage de roues communément appelé ABS.

D'autres caractéristiques et avantages de l'invention ressortiront clairement de la description qui en est faite ci-après, à titre indicatif et nullement limitatif, en référence aux dessins annexés, dans lesquels :

- la figure 1 est un schéma d'organisation opérationnelle d'un procédé conforme à une mode de réalisation possible de l'invention;

- la figure 2 est une vue schématique en perspective d'une installation utilisable pour la mise en oeuvre du procédé de l'invention;

- la figure 3 est un diagramme représentant en ordonnée, en fonction du temps par exemple exprimé en centièmes de secondes et pris en abscisse, le centuple de la valeur du coefficient d'adhérence (courbe en pointillés), la vitesse périphérique du pneu (courbe en trait mixte) et la vitesse de déplacement instantanée de l'axe du pneu par rapport à la surface de référence (courbe en trait plein), dans un mode de mise en oeuvre possible du procédé de l'invention; et

- la figure 4 est un diagramme illustrant une représentation, conforme à l'invention, d'un coefficient d'adhérence sous forme d'une fonction d'une vitesse et d'un taux de glissement.

Comme annoncé précédemment, l'invention concerne un procédé d'estimation de la performance, dans une situation de freinage, d'un pneu PN destiné à équiper un véhicule.

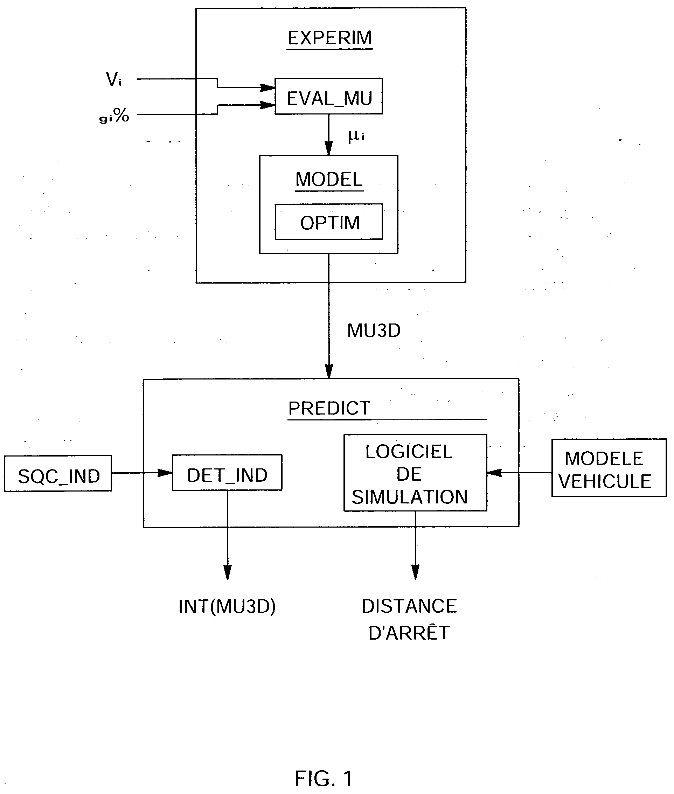

Traditionnellement, un tel procédé comprend une phase expérimentale EXPERIM (figure 1) dont une étape EVAL_MU est consacrée à l'évaluation du coefficient d'adhérence $\mu$ du pneu sur le sol.

On rappelle que le coefficient d'adhérence $\mu$ d'un pneu sur le sol est représenté et donc évalué par le rapport Fx/Fz, où Fx est l'effort longitudinal freineur correspondant à un couple de freinage appliqué par le pneu entre son axe et le sol, et où Fz est la charge du pneu, c'est-à-dire la force d'appui qu'il transmet au sol.

Selon un premier aspect de l'invention, l'étape d'évaluation EVAL_MU est effectuée pour différentes valeurs, notées Vi, de la vitesse V de déplacement relatif de l'axe X du pneu par rapport au sol, et pour différentes valeurs, notées gi%, du taux de glissement g% du pneu sur le sol, de manière à obtenir autant de valeurs, notées $\mu$i, du coefficient d'adhérence $\mu$.

On rappelle à cette occasion que le taux de glissement g% d'un pneu est défini par :

$$g\% = 100*(V - Vp) / V,$$

où Vp est la vitesse de la périphérie du pneu.

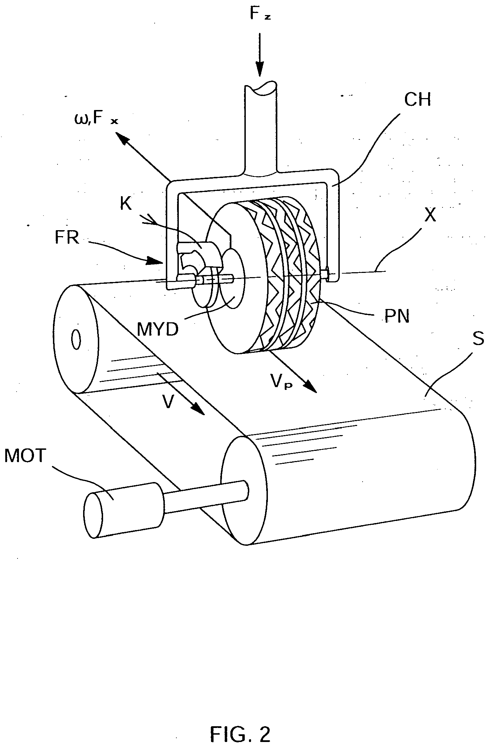

La figure 2 illustre de façon très schématique une installation utilisable, de façon nullement limitative, pour la mise en oeuvre de l'étape d'évaluation EVAL_MU.

Dans l'exemple illustré, cette installation comprend une bande sans fin tendue entre deux rouleaux dont l'un est entraîné en rotation par un moteur MOT, la bande sans fin étant recouverte d'un matériau adhérisé qui lui permet de simuler le sol S d'une voie de roulement sèche, ou d'une voie mouillée selon le résultat souhaité.

Le pneu PN à caractériser est gonflé à une pression de fonctionnement prédéfinie et monté sur une chape CH qui l'applique sur la surface de référence S de la bande sans fin avec une force d'appui Fz prédéfinie.

Le pneu PN est par exemple monté sur un moyeu dynamométrique MYD et / ou couplé en rotation à une roue codeuse (non représentée), cet équipement permettant de disposer, en plus des grandeurs Fz et V, d'un signal représentatif de la vitesse angulaire instantanée de rotation $\omega$ du pneu PN autour de son axe X, et d'un signal représentatif de la force longitudinale Fx correspondant à un couple de freinage K appliqué au pneu PN par l'intermédiaire d'un frein FR dont le moteur est lié à la chape CH.

Comme le sait par ailleurs l'homme du métier, la vitesse périphérique Vp du pneu, dite encore vitesse tangentielle, est liée à la vitesse angulaire de rotation $\omega$ par le rayon effectif de roulement $R_{eff}$, ce rayon pouvant par exemple être obtenu comme étant égal à la valeur prise par le rapport $V/\omega$ pendant les phases de roulement sans freinage.

Le pneu PN est disposé parallèlement à l'axe médian de la bande sans fin et perpendiculairement à la surface de référence S, c'est-à-dire avec un angle de dérive et un angle de carrossage nuls.

Cette installation, qui est très avantageusement placée dans un local à température sensiblement constante, permet de piloter les variables que constituent d'une part la vitesse V de défilement de la surface S par rapport à l'axe fixe X du pneu PN, et d'autre part le taux de glissement g%.

Par définition du taux de glissement, ce dernier prend la valeur 0% lorsque Vp = V, c'est-à-dire lorsque le pneu PN est en roulement pur sur la surface S, et prend la valeur 100% lorsque Vp = 0, c'est-à-dire lorsque la roue équipée du pneu PN est totalement bloquée par le freinage.

Après une phase de mise en température du pneu PN par roulement à une vitesse initiale, l'étape d'évaluation EVAL_MU se poursuit par un cycle de freinage, au cours duquel un couple de freinage K est périodiquement appliqué au pneu PN pour une vitesse V décroissante de défilement de la surface S, et pendant que sont relevées les variables instantanées V, $\omega$, Fz et Fx.

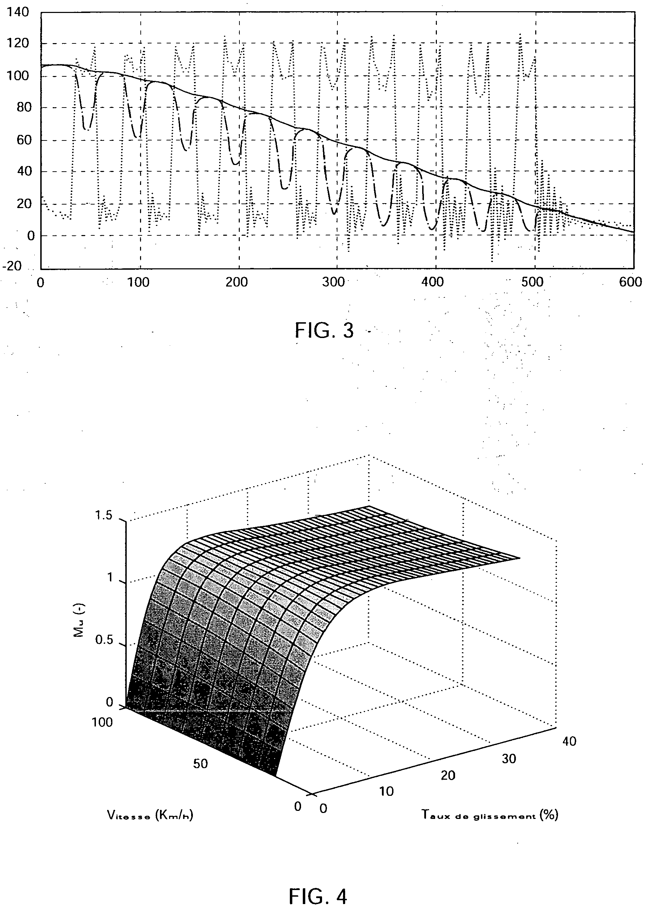

Cette étape permet l'obtention de courbes telles que celles illustrées à la figure 3, dans laquelle la courbe en pointillés représente le centuple de la valeur du coefficient d'adhérence $\mu$, la courbe en trait mixte représente la vitesse périphérique Vp du pneu, et la courbe en trait plein représente la vitesse instantanée de déplacement relatif de l'axe X du pneu par rapport à la surface S de référence.

Cette figure 3 illustre une séquence de freinage SQC_FR pertinente pour caractériser un pneu en situation de freinage sur véhicule actuel, à savoir une séquence du type de celle que génère un système de freinage à régulation de type ABS, c'est-à-dire à antiblocage de roues, pendant un test de freinage de 100km/h à 0km/h.

Dans une telle séquence, la vitesse V diminue de façon monotone, idéalement linéaire, depuis une vitesse maximale V0 jusqu'à une vitesse minimale de préférence nulle, dans un intervalle de temps paramétrable compris entre 3 et 6 secondes.

Dans cet intervalle, il est possible de réaliser 5 à 10 cycles de variation du taux de glissement g% entre une valeur nulle et une valeur maximale g%max par exemple paramétrable entre 20% et 100%.

Dans ces conditions, le paramètre g%max précité est choisi de manière à atteindre et dépasser légèrement la valeur du taux de glissement pour laquelle l'effort longitudinal freineur Fx est maximal.

Selon un deuxième aspect de l'invention, la phase expérimentale EXPERIM comprend une étape de modélisation MODEL qui consiste à représenter le coefficient d'adhérence $\mu$ de ce pneu, tel qu'il se manifeste par ses multiples valeurs $\mu_i$ obtenues lors de l'étape d'évaluation EVAL_MU, par une fonction, notée MU3D, de la vitesse V et du taux de glissement g%.

Pour ce faire, l'étape de modélisation MODEL comprend de préférence une opération d'optimisation OPTIM qui consiste à rechercher les valeurs à affecter à des paramètres prédéterminés pour qu'une expression paramétrique de la fonction MU3D précédemment évoquée corresponde au mieux au coefficient d'adhérence $\mu$ tel qu'il a été évalué lors de l'étape d'évaluation EVAL_MU.

Par exemple, l'expression paramétrique de la fonction MU3D peut prendre la forme :

$$Mu3D = (D*sin(C*atan(B*X1-E*(B*X1-atan(B*X1)))))+Sv,$$

où D, B et X1 correspondent eux-mêmes aux expressions paramétriques suivantes :

$$D = D0 + D1*V + D2*V^2,$$

$$B = B0 + B1*V + B2*V^2,$$

$$X1 = (g\% / 100) + Sh,$$

où Sv est par exemple égal à 0.01, et où Sh peut être nul.

L'opération d'optimisation OPTIM, qui peut utiliser tout outil d'optimisation connu, consiste donc à rechercher les valeurs à affecter aux paramètres B0, B1, B2, C, D0, D1, D2, et E au moins, pour que l'expression paramétrique MU3D ci-dessus prenne, pour un ensemble aussi grand que nécessaire de valeurs différentes Vi de la vitesse V et de valeurs différentes gi% du taux de glissement g%, des valeurs respectives qui soient les plus proches possible des valeurs μi correspondantes qui ont été relevées pour le coefficient d'adhérence μ lors de l'étape d'évaluation EVAL_MU.

En pratique, il peut être souhaitable de procéder, préalablement à l'opération OPTIM, à une opération de filtrage sur les signaux de mesure tels que ω, V, Fz et Fx pour s'affranchir d'éventuels artefacts liés à des bruits de mesure.

Une fois déterminées les valeurs des paramètres B0, B1, B2, C, D0, D1, D2, E, Sh et Sv, la fonction MU3D représentative du coefficient d'adhérence μ peut être tracée dans un espace tridimensionnel tel qu'illustré à la figure 4 et dont une première dimension correspond au taux de glissement g%, dont une deuxième dimension correspond à la vitesse V, et dont une troisième dimension correspond à la valeur modélisée du coefficient d'adhérence μ.

Bien qu'un tel diagramme constitue déjà en soi un outil d'estimation de la performance d'un pneu PN en situation de freinage, le procédé de l'invention peut comprendre en outre une phase prédictive PREDICT permettant l'obtention d'un bilan plus élaboré de la performance de ce pneu.

Pour ce faire, cette phase PREDICT peut notamment inclure une opération DET_IND permettant la détermination d'un indicateur global INT(MU3D) de performance du pneu.

Cette opération DET_IND consiste par exemple à fournir, en tant qu'indicateur de performance, l'intégrale, par rapport à la vitesse instantanée V, et par rapport au taux de glissement g%, de la fonction MU3D sur un domaine d'intégration formé de vitesses instantanées et de taux de glissement correspondant à une séquence de freinage SQC_FR, réelle ou simulée, d'un véhicule équipé du pneu PN correspondant.

De préférence, la séquence de freinage SQC_FR choisie pour définir le domaine d'intégration de la vitesse instantanée V et du taux de glissement g% inclut une modulation du couple de freinage K du type de celles que réalise un système de freinage doté d'une fonction d'antiblocage de roues ou ABS.

Typiquement, pour un freinage de 100 km/h jusqu'à l'arrêt complet du véhicule, cet indicateur INT(MU3D) serait donc constitué par l'intégrale de la fonction MU3D, calculée entre 0 et 100 km/h pour la variable V, et entre 5% et 15% pour la variable g%.

En incorporant la fonction MU3D au modèle dynamique d'un véhicule, il est également possible de prévoir la distance de freinage du véhicule modélisé, équipé de pneumatiques présentant un coefficient d'adhérence modélisé par la fonction MU3D, et appliquant une séquence de freinage SQC_FR soit obtenue à partir de mesures réelles, soit correspondant à un signal synthétisé, soit générée par un modèle de freinage de type ABS, c'est-à-dire doté d'une fonctionnalité d'antiblocage de roues.

**Revendications**

1. Procédé d'estimation de la performance, dans une situation de freinage, d'un pneu (PN) susceptible d'équiper un véhicule, ce procédé comprenant :

   • une phase expérimentale (EXPERIM) incluant au moins :

      o une étape (EVAL_MU) d'évaluation du coefficient d'adhérence (μ) du pneu (PN) sur le sol (S), effectuée pour différentes valeurs (Vi) de la vitesse (V) de déplacement relatif de l'axe (X) du pneu par rapport au sol et pour différentes valeurs (gi%) du taux de glissement (g%) du pneu sur le sol,
      o une étape de modélisation (MODEL) consistant à représenter le coefficient d'adhérence (μ) de ce pneu, tel qu'il résulte de l'étape d'évaluation (EVAL_MU), par une fonction (MU3D) de la vitesse (V) de déplacement relatif de l'axe (X) du pneu (PN) par rapport au sol (S) et du taux de glissement (g%) de ce pneu sur le sol ; et

le procédé étant **caractérisé en ce qu'**il comprend en outre une phase prédictive (PREDICT) de la performance du pneu en situation de freinage incluant une opération (DET_IND) de détermination d'un indicateur global (INT(MU3D)) de performance du pneu, consistant à intégrer, par rapport à la vitesse instantanée (V) de déplacement relatif de l'axe (X) du pneu (PN) et du sol (S), et par rapport au taux de glissement (g%) de ce pneu sur le sol, la fonction (MU3D) représentative du coefficient d'adhérence du pneu, sur un domaine de vitesses instantanées et de taux de glissement correspondant à une séquence de freinage (SQC_FR) réelle ou simulée.

2. Procédé suivant la revendication 1, **caractérisé en ce que** l'étape (EVAL_MU) d'évaluation du coefficient d'adhérence (μ) du pneu (PN) comprend les opérations simultanées consistant :

   • à faire rouler le pneu (PN) sur une surface de référence (S) assimilée au sol,
   • à appliquer le pneu (PN) sur la surface de référence (S) avec une force d'appui (Fz) d'intensité connue par réglage et / ou par mesure,
   • à faire défiler, par rapport à l'axe (X) du pneu, la surface de référence (S) à une vitesse instantanée (V) de déplacement relatif, connue par réglage et / ou par mesure, et décroissant depuis une valeur maximale jusqu'à une valeur minimale,
   • à mesurer la vitesse angulaire instantanée de rotation (ω) du pneu (PN), et
   • à appliquer périodiquement au pneu (PN) un couple de freinage de valeur instantanée (K) connue par réglage et / ou par mesure et propre à provoquer un glissement du pneu (PN) sur la surface de référence (S).

3. Procédé suivant la revendication 2, **caractérisé en ce que** le coefficient d'adhérence (μ) est évalué par le rapport (Fx/Fz), à la force d'appui (Fz), de la force longitudinale (Fx) correspondant au couple de freinage (K).

4. Procédé suivant l'une quelconque des revendications précédentes combinée à la revendication 2, **caractérisé en ce que** l'opération d'application périodique du couple de freinage (K) est régulée pour faire varier le taux de glissement (g%) du pneu (PN) par rapport à la surface de référence (S) entre une valeur minimale de préférence nulle et une valeur maximale au moins égale à 20 %.

5. Procédé suivant la revendication 3, **caractérisé en ce que** l'opération d'application périodique du couple de freinage (K) est régulée pour atteindre périodiquement la valeur du taux de glissement (g%) pour laquelle la valeur d'adhérence (μ) est maximale.

6. Procédé suivant l'une quelconque des revendications précédentes, **caractérisé en ce que** l'étape (EVAL_MU) d'évaluation du coefficient d'adhérence (μ) du pneu est mise en oeuvre dans un local à température sensiblement constante.

7. Procédé suivant l'une quelconque des revendications précédentes, **caractérisé en ce que** l'étape (MODEL) de modélisation comprend une opération (OPTIM) d'optimisation consistant à rechercher les valeurs à affecter à des paramètres prédéterminés pour qu'une expression paramétrique de ladite fonction (MU3D) de la vitesse (V) de déplacement relatif de l'axe (X) du pneu (PN) par rapport au sol (S) et du taux de glissement (g%) de ce pneu sur le sol corresponde au mieux au coefficient d'adhérence (μ) tel qu'évalué, lors de l'étape d'évaluation (EVAL_MU), pour les différentes valeurs (Vi) de la vitesse (V) de déplacement relatif de l'axe (X) du pneu (PN) par rapport au sol (S) et pour les différentes valeurs (gi%) du taux de glissement (g%) du pneu (PN) sur le sol (S).

8. Procédé suivant la revendication 7, **caractérisé en ce que** l'opération d'optimisation (OPTIM) utilise l'expression paramétrique suivante :

$$\text{Mu3D} = (D*\sin(C*\text{atan}(B*X1-E*(B*X1-\text{atan}(B*X1)))))+Sv,$$

où D, B et X1 correspondent eux-mêmes aux expressions paramétriques suivantes :

$$D = D0 + D1*V + D2*V^2,$$

$$B = B0 + B1*V + B2*V^2,$$

$$X1 = (g\% / 100) + Sh,$$

et où V est la vitesse instantanée de déplacement relatif de l'axe (X) du pneu (PN) par rapport à la surface de référence (S), et où g% est le taux de glissement de ce pneu par rapport à cette surface, défini par :

$$g\% = 100*(V - Vp)/ V,$$

Vp étant la vitesse périphérique du pneu.

9. Procédé suivant l'une quelconque des revendications précédentes, **caractérisé en ce que** la séquence de freinage (SQC_FR) choisie pour définir le domaine d'intégration de la vitesse instantanée (V) et du taux de glissement (g%) inclut une modulation du couple de freinage (K) du type de celle rencontrée sur un véhicule équipé d'un système antiblocage de roues ou "ABS".

**Patentansprüche**

1. Verfahren zur Schätzung der Leistung, in einer Bremssituation, eines Reifens (PN), der ein Fahrzeug ausstatten kann, wobei dieses Verfahren enthält:

   • eine Versuchsphase (EXPERIM), die mindestens umfasst:

   o einen Schritt (EVAL_MU) der Ermittlung eines Adhäsionskoeffizienten ($\mu$) des Reifens (PN) am Boden (S), durchgeführt für verschiedene Werte (Vi) der Geschwindigkeit (V) der relativen Verschiebung der Achse (X) des Reifens bezüglich des Bodens und für verschiedene Werte (gi%) der Schlupfrate (g%) des Reifens auf dem Boden,
   o einen Schritt der Modellierung (MODEL), der darin besteht, den Adhäsionskoeffizienten ($\mu$) dieses Reifens, wie er aus dem Ermittlungsschritt (EVAL_MU) resultiert, durch eine Funktion (MU3D) der Geschwindigkeit (V) der relativen Verschiebung der Achse (X) des Reifens (PN) bezüglich des Bodens (S) und der Schlupfrate (g%) dieses Reifens auf dem Boden darzustellen; und

   das Verfahren **dadurch gekennzeichnet ist, dass** es außerdem eine prädiktive Phase (PREDICT) der Leistung des Reifens in einer Bremssituation enthält, die einen Vorgang (DET_IND) der Bestimmung eines globalen Leistungsindikators (INT(MU3D)) des Reifens umfasst, der darin besteht, bezüglich der Augenblicksgeschwindigkeit (V) relativer Verschiebung der Achse (X) des Reifens (PN) und des Bodens (S) und bezüglich der Schlupfrate (g%) dieses Reifens auf dem Boden die Funktion (MU3D), die für den Adhäsionskoeffizienten des Reifens repräsentativ ist, über einen Bereich von Augenblicksgeschwindigkeiten und der Schlupfrate zu integrieren, die einer realen oder simulierten Bremssequenz (SQC_FR) entsprechen.

2. Verfahren nach Anspruch 1, **dadurch gekennzeichnet, dass** der Schritt (EVAL_MU) der Ermittlung des Adhäsionskoeffizienten ($\mu$) des Reifens (PN) die gleichzeitigen Vorgänge enthält, die darin bestehen:

   • den Reifen (PN) auf einer Bezugsfläche (S) rollen zu lassen, die dem Boden gleichgesetzt wird,
   • den Reifen (PN) mit einer Auflagekraft (Fz) mit durch Einstellen und/oder Messen bekannter Stärke auf die Bezugsfläche (S) zu drücken,
   • die Bezugsfläche (S) mit einer Augenblicksgeschwindigkeit (V) relativer Verschiebung, die durch Einstellung und/oder Messung bekannt ist, und von einem maximalen Wert bis zu einem minimalen Wert abnehmend, bezüglich der Achse (X) des Reifens vorbeilaufen zu lassen,
   • die augenblickliche Drehwinkelgeschwindigkeit ($\omega$) des Reifens (PN) zu messen, und
   • periodisch ein Bremsmoment eines durch Einstellen und/oder Messen bekannten Augenblickswerts (K), und das einen Schlupf des Reifens (PN) auf der Bezugsfläche (S) bewirken kann, an den Reifen (PN) anzuwenden.

3. Verfahren nach Anspruch 2, **dadurch gekennzeichnet, dass** der Adhäsionskoeffizient ($\mu$) durch das Verhältnis (Fx/Fz) der dem Bremsmoment (K) entsprechenden Längskraft (Fx) zur Auflagekraft (Fz) ermittelt wird.

4. Verfahren nach einem der vorhergehenden Ansprüche kombiniert mit Anspruch 2, **dadurch gekennzeichnet, dass** der Vorgang des periodischen Anwendens des Bremsmoments (K) geregelt wird, um die Schlupfrate (g%) des Reifens (PN) bezüglich der Bezugsfläche (S) zwischen einem minimalen Wert vorzugsweise gleich Null und einem maximalen Wert mindestens gleich 20% variieren zu lassen.

5. Verfahren nach Anspruch 3, **dadurch gekennzeichnet, dass** der Vorgang des periodischen Anwendens des Bremsmoments (K) geregelt wird, um periodisch den Wert der Schlupfrate (g%) zu erreichen, bei dem der Adhäsionswert ($\mu$) maximal ist.

6. Verfahren nach einem der vorhergehenden Ansprüche, **dadurch gekennzeichnet, dass** der Schritt (EVAL_MU) der Ermittlung des Adhäsionskoeffizienten ($\mu$) des Reifens in einem Raum mit im Wesentlichen konstanter Temperatur durchgeführt wird.

7. Verfahren nach einem der vorhergehenden Ansprüche, **dadurch gekennzeichnet, dass** der Schritt (MODEL) der Modellierung einen Optimierungsvorgang (OPTIM) enthält, der darin besteht, die Werte zu suchen, die vorbestimmten Parametern zuzuordnen sind, damit ein parametrischer Ausdruck der Funktion (MU3D) der Geschwindigkeit (V) relativer Verschiebung der Achse (X) des Reifens (PN) bezüglich des Bodens (S) und der Schlupfrate (g%) dieses Reifens auf dem Boden dem Adhäsionskoeffizienten ($\mu$) wie beim Ermittlungsschritt (EVAL_MU) ermittelt am besten entspricht, für die verschiedenen Werte (Vi) der Geschwindigkeit (V) relativer Verschiebung der Achse (X) des Reifens (PN) bezüglich des Bodens (S) und für die verschiedenen Werte (gi%) der Schlupfrate (g%) des Reifens (PN) auf dem Boden (S).

8. Verfahren nach Anspruch 7, **dadurch gekennzeichnet, dass** der Optimierungsvorgang (OPTIM) den folgenden parametrischen Ausdruck verwendet:

```
Mu3D             =             (D*sin(C*atan(B*X1-E*(B*X1-
atan(B*X1)))))+Sv,
```

wobei D, B und X1 selbst den folgenden parametrischen Ausdrücken entsprechen:

D = D0 + D1*V + D2*V$^2$,
B = B0 + B1*V + B2*V$^2$,
X1 = (g% / 100) + Sh,

und wobei V die Augenblicksgeschwindigkeit relativer Verschiebung der Achse (X) des Reifens (PN) bezüglich der Bezugsfläche (S) ist, und wobei g% die Schlupfrate dieses Reifens bezüglich dieser Fläche ist, definiert durch:

```
g% = 100*(V - Vp) / V,
```

wobei Vp die Umfangsgeschwindigkeit des Reifens ist.

9. Verfahren nach einem der vorhergehenden Ansprüche, **dadurch gekennzeichnet, dass** die gewählte Bremssequenz (SQC_FR), um den Integrationsbereich der Augenblicksgeschwindigkeit (V) und der Schlupfrate (g%) zu definieren, eine Modulation des Bremsmoments (K) der Art umfasst, wie sie bei einem Fahrzeug angetroffen wird, das mit einem Antiblockiersystem oder "ABS" ausgestattet ist.

## Claims

1. A method for estimating, during a braking situation, the performance of a tire (PN) to be provided to a vehicle, the method comprising:

- an experimental phase (EXPERIM) including at least:

- a step (EVAL_MU) of assessing the grip coefficient ($\mu$) of the tire (PN) on the ground (S), performed for different values (Vi) of the relative displacement speed (V) of the tire axis (X) with regard to the ground and for different values (gi%) of the tire slip rate (g%) on the ground,
- a modelization step (MODEL) of representing the grip coefficient ($\mu$) of said tire, as resulting from the assessment step (EVAL_MU), by a function (MU3D) of the relative displacement speed (V) of axis (X) of said tire (PN) with regard to the ground (S) and of the slip rate (g%) of said tire on the ground; and

- a predictive phase (PREDICT) including an operation (DET_IND) of determining an overall indicator (INT(MU3D)) of the tire performance, which consists in integrating, against the relative displacement instantaneous speed (V) of axis (X) of the tire (PN) and of the ground (S), and against the slip rate (g%) of said tire on the ground, the function (MU3D) representative of the tire grip coefficient, over a domain of instantaneous speeds and slip rates corresponding to a real or simulated braking sequence (SQC_FR).

2. The method according to claim 1, **characterized in that** step (EVAL-MU) of assessing the grip coefficient ($\mu$) of the tire (PN) comprises the simultaneous operations of:

- rolling said tire (PN) on a reference surface (S) equivalent to the ground,
- applying said tire (PN) on the reference surface (S) with a pressing force (Fz) the intensity of which is known by adjustment and/or measurement,
- running, with regard to the tire axis (X), the reference surface (S) at a relative displacement instantaneous speed (V), known by adjustment and/or measurement, and decreasing from a maximal value to a minimal value,
- measuring the instantaneous angular rotational speed ($\omega$) of said tire (PN), and
- periodically applying on said tire (PN) a braking torque of an instantaneous value (K) known by adjustment and /or measurement and able to cause a slippage of said tire (PN) on the reference surface (S).

3. The method according to claim 2, **characterized in that** the grip coefficient ($\mu$) is assessed by ratio (Fx/Fz), of the longitudinal force (Fx) corresponding to braking torque (K), to the pressing force (Fz).

4. The method according to any one of the preceding claims combined with claim 2, **characterized in that** the operation of periodically applying the braking torque (K) is controlled so as to vary the slip rate (g%) of the tire (PN) with regard to the reference surface (S) between a preferably null minimal value and a maximal value at least equal to 20%.

5. The method according to claim 3, **characterized in that** the operation of periodically applying the braking torque (K) is controlled so as to periodically reach the value of slip rate (g%) for which the grip value ($\mu$) is at its maximum.

6. The method according to any one of the preceding claims, **characterized in that** the step (EVAL_MU) of assessing the tire grip coefficient ($\mu$) is implemented in a substantially constant temperature room.

7. The method according to any one of the preceding claims, **characterized in that** the modelization step (MODEL) comprises an optimization operation (OPTIM) of seeking the values to be allocated to predetermined parameters such that a parametric expression of said function (MU3D) of the relative displacement speed (V) of the axis (X) of the tire (PN) with regard to the ground (S) and of the slip rate (g%) of said tire on the ground correspond at best to the grip coefficient ($\mu$) as assessed, during the assessment step (EVAL_MU), for the different values (Vi) of the relative displacement speed (V) of the axis (X) of the tire (PN) with regard to the ground (S) and for the different values (gi%) of the slip rate (g%) of the tire (PN) on the ground (S).

8. The method according to claim 7, **characterized in that** the optimization operation (OPTIM) uses the following parametric expression:

```
Mu3D = (D*sin(C*atan(B*X1-E*(B*X1-atan(B*X1)))))+Sv,
```

where D, B et X1 themselves correspond to the following parametric expressions:

$$D = D0 + D1*V + D2*V^2,$$

$$B = B0 + B1*V + B2*V^2,$$

$$X1 = (g\% / 100) + Sh,$$

and where V is the relative displacement instantaneous speed of axis (X) of said tire (PN) with regard to the reference surface (S), and where (g%) is the slip rate of said tire with regard to this surface, defined by:

$$g\% = 100*(V - Vp)/ V,$$

Vp being the peripheral speed of the tire.

9.  The method according to any one of the preceding claims, **characterized in that** the braking sequence (SQC_FR) selected so as to define the integration domain of the instantaneous speed (V) and slip rate (g%) includes a modulation of the braking torque (K) of the type encountered on a vehicle provided with an anti lock braking system or "ABS".

EXPERIM

$V_i$

$g_i\%$

EVAL_MU

$\mu_i$

MODEL

OPTIM

MU3D

PREDICT

SQC_IND

DET_IND

LOGICIEL
DE
SIMULATION

MODELE
VEHICULE

INT(MU3D)

DISTANCE
D'ARRÊT

FIG. 1

FIG. 2

FIG. 3

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1637863 A
- EP 0775903 A

- US 20040007046 A

**Littérature non-brevet citée dans la description**

- Real-Time Slip-Based Estimation of Maximum Tire-Road Friction Coefficient. **HEDRICK K et al.** IEEE/ASME TRANSACTIONS ON MECHATRONICS. IEEE SERVICE CENTER, Juin 2004, vol. 9, 454-458

- **C. CANUDAS-DE-WIT et al.** Dynamic Friction Models for Longitudinal Road/Tire Interaction: Theoretical Advances. *21st IASTED CONFERENCE ON MODELLING, IDENTFICATION AND CONTROL,* 28 Février 2002, 48-53